# EUROPEAN PATENT SPECIFICATION

(11) **EP 1 336 272 B1**
(45) Date of publication and mention of the grant of the patent: **23.04.2014**
(21) Application number: 01977295.3
(22) Date of filing: 28.09.2001
(51) Int. Cl.: G06F 21/10

(54) **PROCESSING CONTENT FOR ELECTRONIC DISTRIBUTION USING A DIGITAL RIGHTS MANAGEMENT SYSTEM**
VERARBEITUNG VON INHALT ZUR ELEKTRONISCHEN VERTEILUNG UNTER VERWENDUNG EINES VERWALTUNGSSYSTEMS FÜR DIGITALE RECHTE
TRAITEMENT DE CONTENU POUR DISTRIBUTION ELECTRONIQUE AU MOYEN D'UN SYSTEME DE GESTION DE DROITS NUMERIQUE

(30) Priority: 25.10.2000 US 243259 P; 16.07.2001 US 906428
(43) Date of publication of application: 20.08.2003
(73) Proprietor: Lightning Source, Inc., La Vergne, TN 37086 (US)
(72) Inventor: CLARK, George, Phillip, Lutz, FL 33549 (US); CRAWFORD, Jeffrey, Walter, Penfield, NY 14526 (US); MARINO, Edward John, Hudson, NH 03051 (US); BREWSTER, Laurance, Holmes, Brentwood, TN 37027 (US)
(74) Representative: Black, Diego
(86) International application number: PCT/US2001/030602
(87) International publication number: WO 2002/037210

(56) References cited:
- WO-A-00/59152
- US-A- 5 465 213
- US-A- 5 629 980
- US-A- 6 006 332
- US-A- 6 006 332

## Description

### Background

Much like an ordinary printed book, electronic books ("eBooks") can be used to present text and pictures to readers. Instead of ink and paper, however, an electronic book is a collection of digital data that software, known as an electronic book reader, can interpret and present on a display. A variety of devices run electronic book reader software such as personal computers, handheld personal digital assistants (PDAs), cellular phones with displays, and so forth.

Electronic books can offer a variety of features not traditionally associated with print books. For example, instead of text and pictures, an electronic book may also store data used to present sound such as music and speech. Further, instead of still pictures, an electronic book can also present animated images. Additionally, by transmitting eBook data over a computer network, eBooks can be delivered to remote locations almost instantaneously.

Unfortunately, in many ways, copying data is easier than photocopying pages of a book. To protect the rights of those trying to sell or otherwise limit access to electronic books from pirating, companies have developed a wide variety of digital rights management (DRM) systems. For example, Microsoft currently offers a "Digital Asset Server" that guards against unauthorized user access to Microsoft Reader eBooks. Similarly, Adobe offers a number of different DRM solutions such as Adobe Content Server.

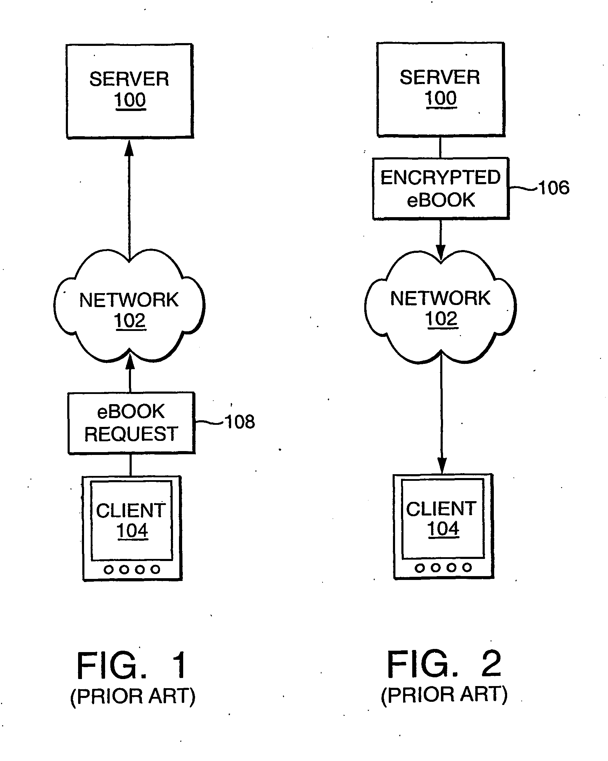

DRM solutions differ significantly in their approaches to the task of controlling access to eBooks. For the purposes of illustration, however, FIGs. 1 and 2 depict a typical DRM scheme. As shown in FIG. 1, a client 104, such as a PDA or personal computer, can send a message 108 to a server 100 over a network 102 such as the Internet. The message 108 requests access to an eBook and includes credentials of the requestor such as the identity of the device 104 and/or reader software making the request. The server 100 uses the credentials to scramble (i.e., encrypt) the data of the requested eBook. As shown in FIG. 2, the server 100 then sends the scrambled data 106 to the requesting client 104. Using its own credentials, the client 104 reader can unscramble (i.e., decrypt) and present the eBook to a user. If a device other than the client 104 receives the eBook data, it should lack the proper credentials needed to perform the unscrambling.

WO 00/59152 describes a method for a device to interdependently validate a digital content package having a piece of digital content in an encrypted form, and a corresponding digital license for rendering the digital content. A first key is derived from a source available to the device, and a first digital signature is obtained from the digital content package. The first key is applied to the first digital signature to validate the first digital signature and the digital content package. A second key is derived based on the first digital signature, and a second digital signature is obtained from the license. The second key is applied to the second digital signature to validate the second digital signature and the license.

US 6,006,332 describes a system for controlling access to digitized data. An unsecure client is provided with a launch pad program which is capable of communicating with a secure Rights Management (RM) server. The launch pad program provides an indicator to a public browser, used by the unsecured client, which acknowledges when a rights management controlled object is detected. Once a rights management object is detected, operational control is transferred from the public browser to the launch pad. The launch pad will communicate with the secured RM server and request the digitized data corresponding to the controlled object. In response thereto, the RM server identifies the type of data being requested, i.e. text, audio, video, etc. and transmits this information to the launch pad. The launch pad then searches whether a secure RM browser appropriate to handle this data is resident on the client. When it is determined that no RM browser is resident, the launch pad requests an appropriate browser from the RM server. Based on this request an appropriate RM browser is obtained and authentication and security information are inscribed. Thereafter the RM browser is transmited to the client. Prior to use, an authentication procedure is undertaken between the launch pad and the RM server to authenticate the RM browser. If authentication does not occur within a predetermined time period, the browser expires.

### Summary

In general, in one aspect, the disclosure describes a method of processing content for distribution over a computer network. The method includes receiving submitted electronic content, accessing identification of at least one of a set of more than one electronic book digital rights management (DRM) systems, and automatically generating an electronic book from the received electronic content for distribution in accordance with the identified electronic book digital rights management system(s).

Embodiments may include one or more of the following features. The electronic content may be received over a network. The method may also include receiving metadata for the electronic content such as an author, a subject, a publisher, and/or a summary; hard copy printing information such as a number of pages, a cover size, and/or a type of binding; and distribution information such as the identification of the DRM(s), street date, and/or authorized retailers. The DRMs may be digital rights management systems offered by non-affiliated vendors. The method may also include transmitting user interface instructions (e.g., markup language instructions) to the network client that enables a submitter to identify electronic content.

In general, in another aspect, the disclosure describes a computer program product, disposed on a computer readable medium, for processing content for distribution over a computer network. The program includes instructions for causing a processor to receive electronic content, access identification of at least one of a set of more than one electronic book DRM systems, and automatically generate an electronic book from the received electronic content for distribution in accordance with the identified electronic book DRM system(s).

In general, in another aspect, the disclosure describes a server that includes at least one network connection, at least one processor, and at least one computer readable medium storing instructions for processing by the processor. The computer readable medium stores instructions corresponding to a set of more than one electronic book digital rights management systems. The medium also stores instructions for receiving electronic content over the at least one network connection, receiving metadata corresponding to the electronic content over the network connection that identifies of at least one of the set of more than one electronic book digital rights management systems, and automatically generating an electronic book from the received electronic content corresponding to the identified electronic book DRM system.

### Brief Description of the Drawings

FIGs. 1-2 are diagrams illustrating an example of an electronic book digital rights management system.
FIG. 3 is a diagram illustrating different features a server can provide to publishers, retailers, and consumers.
FIG. 4 is a diagram illustrating content submission over a network.
FIGs. 5-11 are screenshots of a user interface presented to a publisher.
FIG. 12 is a flow-chart of a process for automatically processing received content.
FIG. 13 is a diagram illustrating catalog distribution to a retailer.
FIG. 14 is a diagram illustrating catalog generation.
FIG. 15 is a flow-chart of a process for generating a catalog.
FIGs. 16-18 are diagrams illustrating fulfillment of a request for an electronic book.
FIG. 19 is a flow-chart of a process for fulfilling a request for an electronic book.

### Detailed Description

### I. Introduction

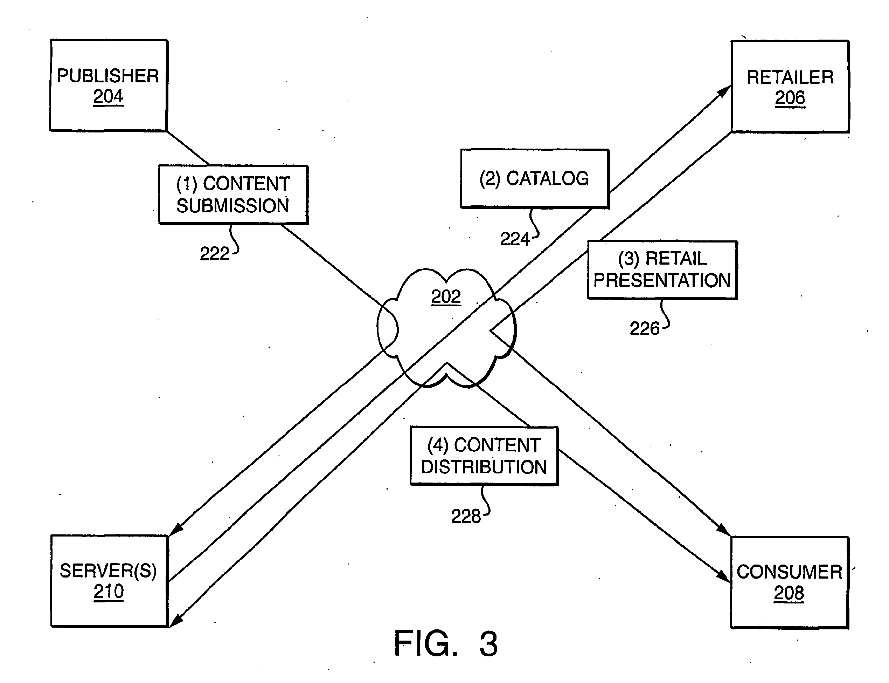

FIG. 3 shows a server 210 that can provide a variety of features that can ease tasks involve in electronic and printed book distribution. To illustrate some of these features, FIG. 3 shows a sample sequence that begins with submission 222 of a title from a publisher 204 and ends with the title's distribution 228 to a consumer 208.

As shown in FIG. 3, a publisher client 204 can submit content 222 for a title to the server 210 over a network 202 such as the Internet. Such content can include data specifying text, graphics, and even multimedia such as music or video.

The publisher client 204 can also submit information about the content known as "metadata". The metadata can include identifier information such as the ISBN, UPC, or DOI of the work; pricing information for one or more markets in which the work may be sold; bibliographic information such as the author and title of the work; distribution information such as identification of territories where selling the work is authorized, retailers authorized to sell the work, and/or identification of one or more digital rights management systems for protecting the work when distributed electronically; and/or manufacturing information, such as a printing and/or binding specifications, for use in the preparation of hard copies of the work.

The server 210 can automatically prepare the content for distribution. For example, for electronic distribution, the server 210 can automatically format eBook information for distribution of the title in accordance with one or more selected digital rights management systems. For hard copy manufacturing and distribution, the server 210 can automatically prepare the content for printing, for example, by extracting a cover page for color printing and generating bit-map images of book pages.

In addition to the behind-the-scenes work of preparing content for distribution, the server 210 may also provide information to retailers 206, such as Amazon.com and BarnesandNoble.com, to help display and sell titles. For example, the server 210 may use collected metadata to generate a customized catalog file 224 of content authorized for sale by a retailer 206. The catalog file 224 can include author names, a summary, and/or selected images (e.g., book cover thumbnails). A retailer 206 can use the catalog file 224 to automatically update its web-site's offerings. For example, Amazon.com can automatically generate web-pages for newly available titles identified in the catalog file 224.

The server 210 can also insulate retailer 206 from the technical details of title distribution across multiple digital rights management systems. For example, after a consumer 208 selects an eBook from the retailer's 206 web-site 226, the server 210 can distribute 228 the title to a consumer 208 in accordance with a digital rights management system selected for the content. This frees the retailer 206 from the burden of setting-up, integrating, and maintaining a host of different digital rights management systems that different eBook formats may require. Similarly, for a hard copy, the server 210 can offer a "print-on-demand" service that produces a hard copy of a title for delivery to a consumer or retailer.

Though FIG. 3 depicts a single publisher 204, retailer 206, and consumer 208, the server 210 can support a very large number of each of these entities. Further, while the server 210 may constitute a single computer, the server 210 may instead represent a logical collection of devices.

While the description above highlights a few features offered by the server 210, the server 210 can also offer a wide array of other services such as providing reports (e.g. usage reports, title demand reports, retailer invoices, and publisher compensation) to retailers 206 and publishers 204. A server 210 may offer all of the features described above or only support a limited subset of these services. These and other features are described in greater detail below.

### II. Content Submission

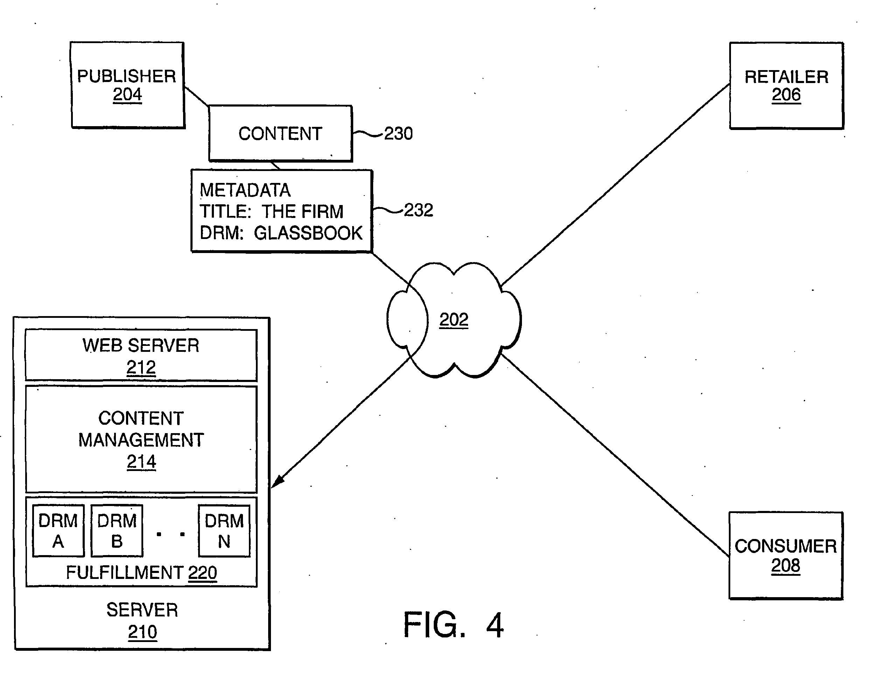

FIG. 4 illustrates a scheme that enables a publisher 204 to securely transmit content 230 over a network 202 to a server 210 for subsequent electronic distribution and/or hard copy printing. As shown, in addition to content 230, the server 210 can also receive metadata 232 corresponding to the content. Such metadata can include bibliographic information about the content, "print-on-demand" information used to generate a hard copy of the content, and/or distribution information such as identification of retailers authorized to sell the content and/or identification of one or more electronic book digital rights management (DRM) systems. For security, the server 210 and publisher client 204 can communicate over a secure network connection, such as HTTPS (HyperText Transfer Protocol Secure), that encrypts/decrypts information communicated by the publisher's client 204 and the server 210.

The server 210 can use the received content 230 and metadata 232 to automatically generate distribution versions of the content. For example, for electronic distribution, the server 210 can automatically prepare a version of the content for distribution in accordance with the identified DRM scheme(s). Similarly, for hard copy printing, the server 210 can automatically generate a version of the content, for example, by preparing an image of each page to be printed.

As shown in FIG. 4, the server 210 includes a content management 214 system that stores and processes the received content 230 and metadata 232. The server 210 also includes a fulfillment system 220 that features instructions for different digital rights management systems. For example, the fulfillment system 220 may support DRMs from non-affiliated vendors. For instance, the system 220 may feature Microsoft Reader Digital Asset Server and Adobe Content Server Digital Rights Management System.

As shown, the server 210 may also include web server instructions 212 that make these features available to a publisher 204 via an Internet web-site. In technical terms, the web server instructions 212 handle HTTP (HyperText Transfer Protocol) messages exchanged with network clients (e.g., web browsers). These messages can include, for example, instructions for presenting a user interface that transmits information collected from a remote user back to the server 210. Such user interface instructions may be encoded in a variety of ways such as SGML (Structured Generalized Markup Language) instructions (e.g., HTML (HyperText Markup Language) and XML (extensible Markup Language)) or instructions that include conditional statements (e.g., "IF" statements) such as an applet.

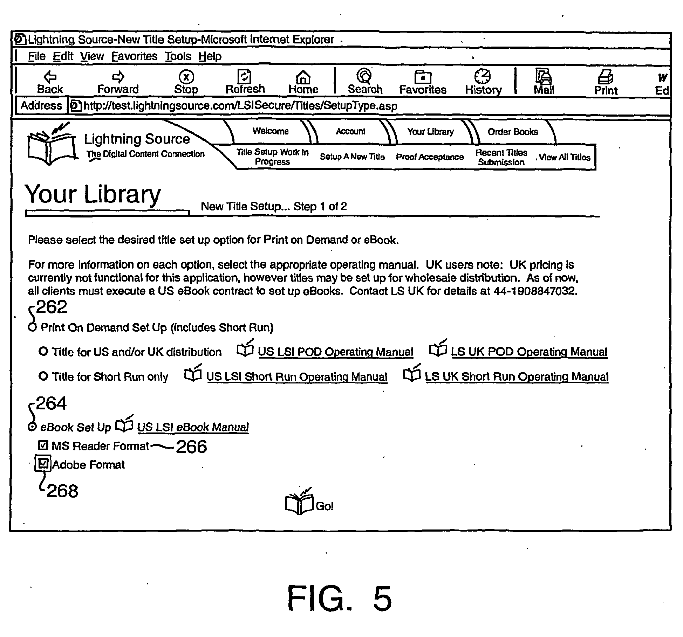

FIGs. 5-11 illustrate samples of user interface screens the server 210 may provide to a publisher to collect content and metadata. These sample screens depict stages of a sample process of content submission that includes selecting one or more distribution options, providing information for the selected options, monitoring the processing status of submitted content, and proofing a distribution version of the content. The following sequence may be preceded, for example, by user interface screens that enable a publisher to set up an account. For instance, a publisher may provide banking or credit information for billing and/or compensation.

As shown in FIG. 5, after establishment of an account, content submission can permit user selection of hard copy "print-on-demand" preparation 262 and/or eBook distribution 264 of the content. As shown, a publisher selecting eBook distribution 264 may also select one or more DRM schemes for eBook distribution (e.g., "MS Reader Format" 266 or "Adobe eBook Format" 268).

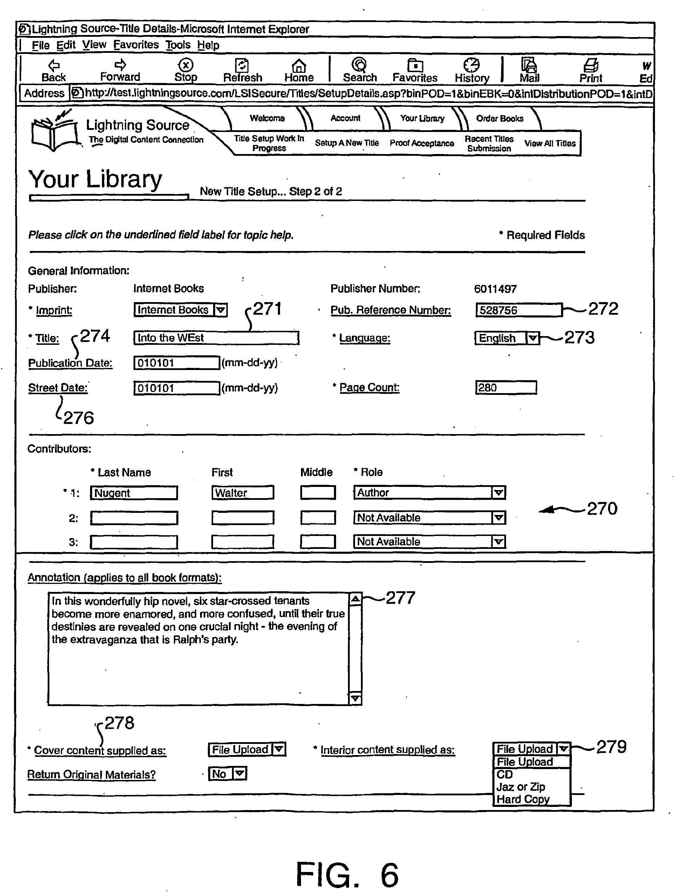

As shown in FIG. 6, a user interface screen may collect some metadata applicable to both eBooks and "print-on-demand" titles. For example, as shown, the user interface can collect a title 271, a publisher reference number 272 such as an ISBN (International Standard Book Number), a language 273, a list of contributors 270, and a summary annotation 277. The user interface may also collect a publication date 274 and/or a "street date" (the date the publication may first be offered for sale) 276 that represents a date in the future before which the publisher does not want distribution to occur.

As shown, the user interface also enables a publisher to select a method of delivering content 278 to the server. For example, a publisher can select file upload over the Internet, physical delivery of a computer readable medium (e.g., a CD-ROM or floppy), or a hard copy for scanning or other conversion into electronic form. The publisher can similarly specify 279 a mechanism for uploading a book cover image.

Other screens may collect other information from a publisher. For example, other screens may collect an edition number or description, an indication of whether the edition is an abridged edition, whether the content is "large print", a series ID and/or number, one or more subject matter categories, an audience age range or reading level, and one or more identification codes (e.g., a Library of Congress card number, a Dewey Decimal Classification No., a UPC [Universal Product Code] code, and so forth).

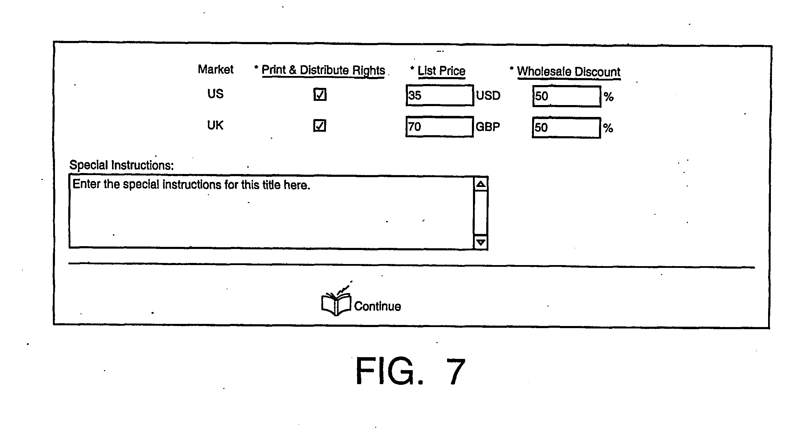

As shown in FIG. 7, a publisher can also specify both list prices and wholesale discounts. The server can use this information to automatically initiate transactions to compensate the publisher for each sale. The publisher may also specify territorial rights. For example, a publisher may not wish, or be permitted, to sell or transmit content beyond particular geographic bounds.

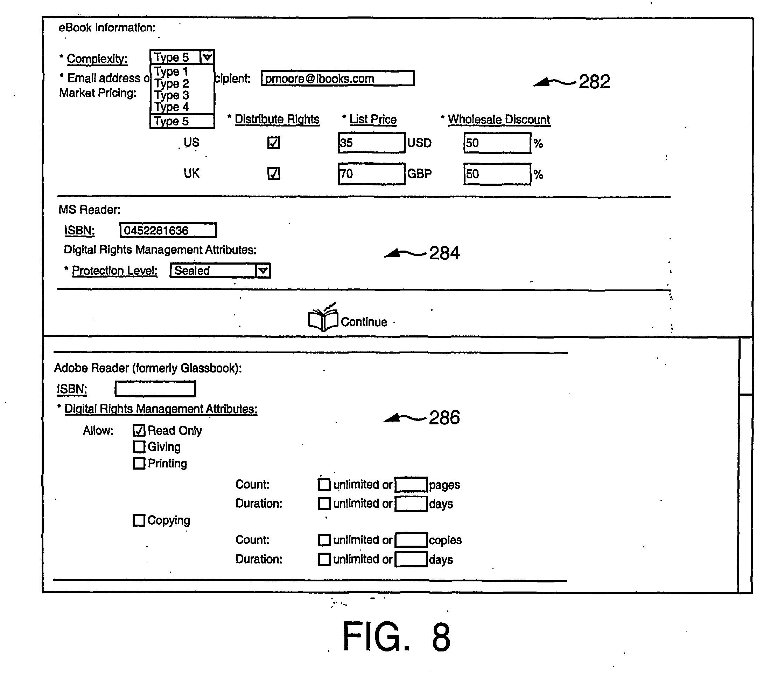

The information collected from a publisher may differ depending on the distribution methods selected. For example, FIG. 8 shows additional information collected for eBook distribution. As shown, the user interface can enable a publisher to select different DRM options 284, 286 supported by selected DRM systems. For example, Adobe Reader options 286 can give a publisher control over consumer printing and copying based on a maximum number of days or copies.

The user interface shown in FIG. 8 also enables a publisher to rate 280 the complexity of the content. For instance, a novel with plain text may be less complex to convert to an eBook than a multi-column, graphic-intensive textbook. The rating scheme may be based on a number of criteria such as the number of columns of text, number of images or tables per page, number of hyperlinks per page, whether the content includes a table of contents, footnotes, and so forth. For example, a rating scheme may be defined as follows:

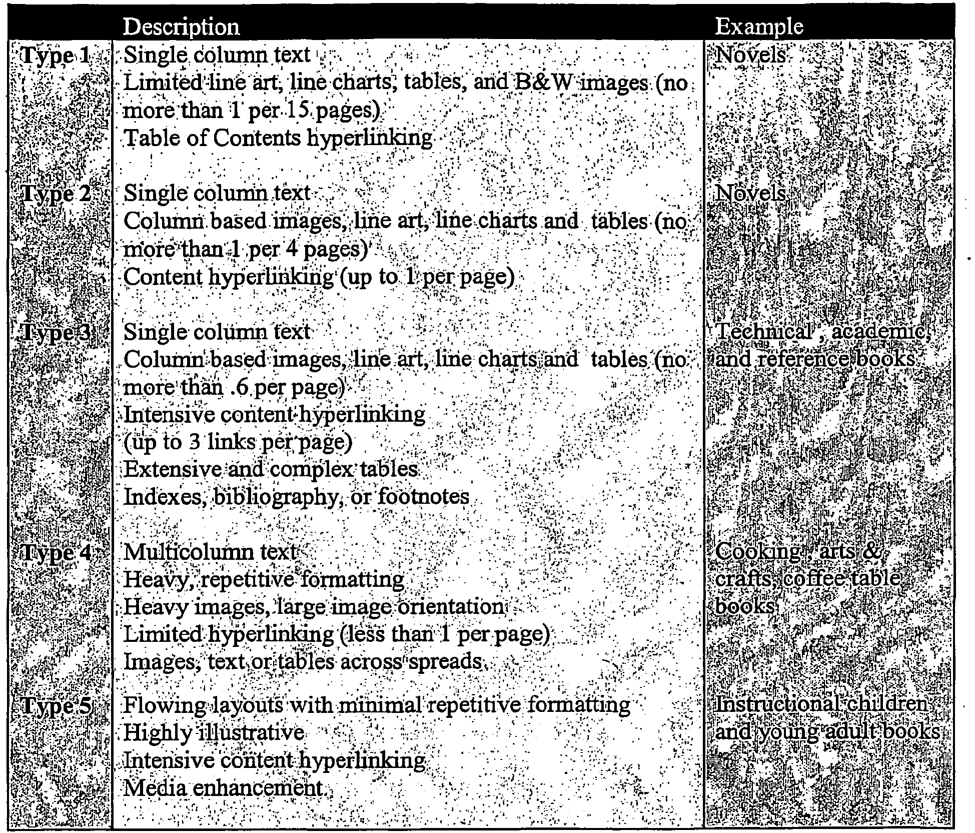

Based on the rating, the server may determine a fee for processing the content. Additionally, the server can use the rating to determine whether a requested format may be a poor selection. For example, Adobe PDF format provides a fixed page layout regardless of display device and may not be appropriate for material having many columns.

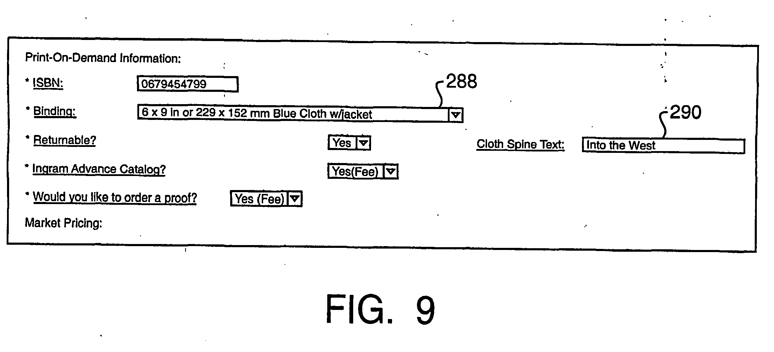

As shown in FIG. 9, information collected for content selected for "print-on-demand" may differ from that collected for eBook distribution. For example, as shown, the user interface may collect user input specifying a type of binding 288 and/or the text 290 to print on the book spine.

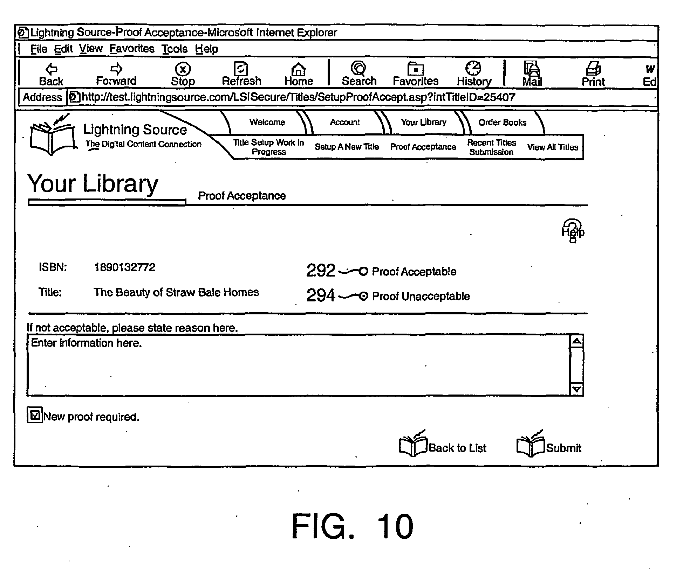

Again, after receiving the metadata entered by the publisher and the content, the server can automatically prepare the content for distribution in the publisher selected format(s). After doing so, the server may generate one or more "proofing" copies of the distribution version(s) of the content. For example, the server may prepare and transmit an eBook to the publisher or, in the case of "print-on-demand" content, the server may prepare an Adobe PDF (Portable Document Format) file featuring images of the pages as they would be printed. In either case, as shown in FIG. 10, a publisher can accept 292 or reject 294 the proofing copy by interaction with the user interface. Accepted proofs will be made available for distribution.

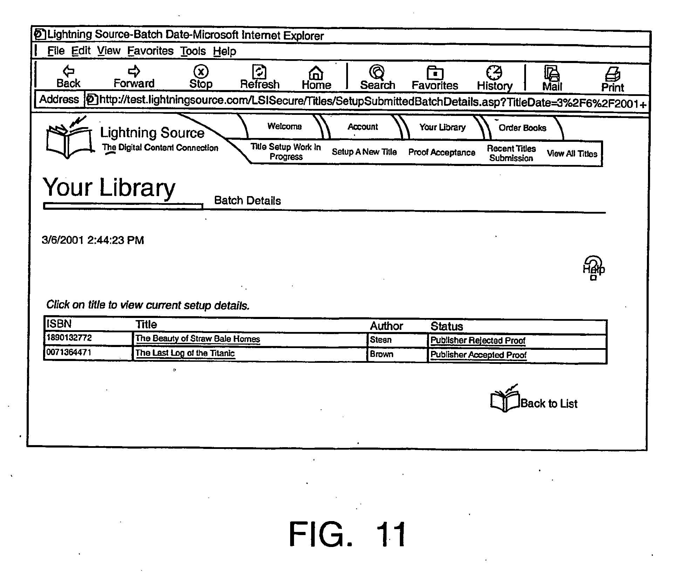

As shown in FIG. 11, a publisher can monitor progress of their submitted titles throughout the content submission process. For example, the user interface shown indicates the status of each submitted title. Such statuses include "awaiting material", "pre-flighting", and "proofing". Additionally, selecting a title hyperlink can cause display of more detailed information about the title, such as its corresponding metadata.

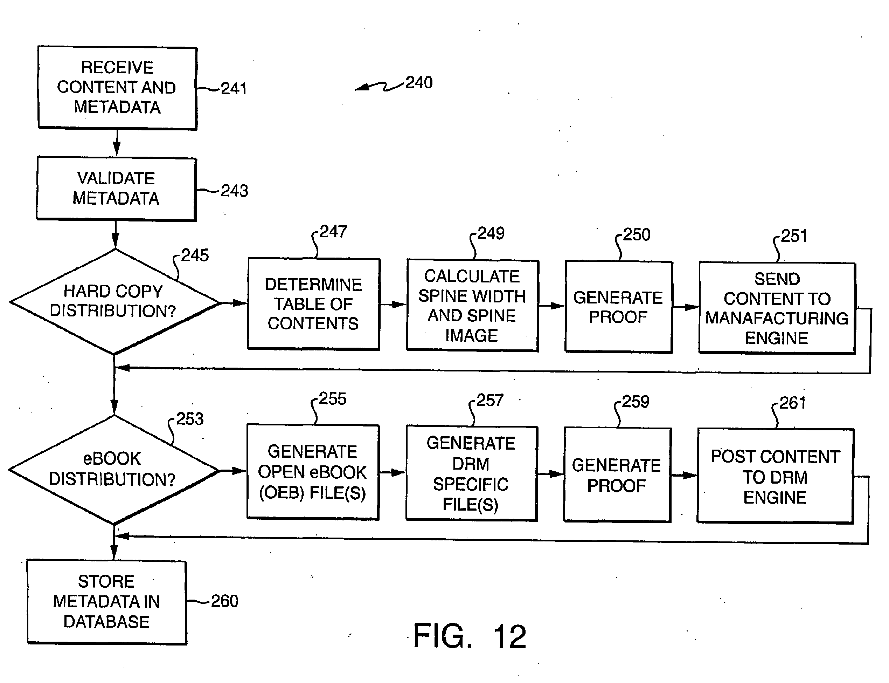

FIG. 12 shows a process 240 for automatic handling of content submission. As shown, the process 240 may begin with receipt 241 of content and its corresponding metadata. The process 240 can handle a wide variety of content formats such as Adobe Acrobat PDF, PostScript, QuarkXpress, PageMaker, InDesign, Word, and tagged text formats such as HTML. Many of these content formats do not include conditional statements.

As shown, the process 240 may validate 243 received metadata. For example, the process 240 may ensure that no metadata specifies a wholesale discount over %50. The process 240 may also validate an ISBN number, for example, by verifying the number's check digit. A wide number of other metadata validations may take place such as a request of payment authorization from a publisher's credit source.

After receipt 241 of the content and metadata, the process 240 automatically checks ("pre-flights") the content for numerous issues which might prevent accurate automatic preparation of a title. For example, the process 240 may verify receipt of all image files and required fonts. Should an error be encountered, the server can automatically notify the publisher and await resubmission.

Assuming the metadata validation 243 and pre-flighting proceeded without significant error, the process 240 can continue converting the received content.to selected distribution format(s), for example, by reflowing and repaginating text, replacing images, and so forth.

If the selected distribution format(s) include hard copy distribution 245, the process 240 can automatically perform a number of tasks that prepare the content for printing. For example, for text submissions, the process 240 can parse the content to construct 247 a table of contents. The process 240 can also perform a wide variety of other tasks such as analyzing the structure of text to indent the first paragraph of a new chapter more than other paragraphs. Similarly, the process 240 may alter text, for example, by compressing three consecutive periods into a single ellipses character or using an elongated dash instead of using a simple "-" character. The process 240 may also perform other tasks, such as extracting a cover image from the content.

As shown, the process 240 can calculate 249 a spine width for a manufactured book based on page thickness and the number of pages. The process 240 can also determine a spine image for the binding, for example, by creating an image of the title in a font that fits the spine width.

After automatically generating information for printing the content, the process 240 can generate 250 a proof copy, for example, by e-mailing images of the pages to be printed or by sending a hard copy of the title for publisher review. After review, the process 240 can send 251 the generated information for the title to a manufacturing engine that can control printing of the title on demand, for example, by printing a color cover, printing a book block, and binding the printed cover and book block.

A different sequence may occur if the selected distribution format(s) include electronic book distribution 253. For example, the process 240 may process the content to generate 255 one or more Open eBook (OEB) files. For instance, the process 240 may include extraction of a cover page from submitted content and/or lossy compression of submitted images to reduce the size of any distribution files.

Based on these OEB files, the process 240 may generate 257 DRM specific files. Generation of DRM specific files may include DRM specific conversions. For example, for an Adobe eBook generation may include construction of an Adobe style hyperlinked table of contents, a copyright page updated to include eBook ISBN, and logical page numbers that permit eBook pages to match a title page numbering sequence. For a Microsoft eBook, generation may include construction of a Microsoft style floating hyperlinked table of contents, a copyright page updated to include eBook ISBN, and conversion of non-supported book layouts (e.g., marginal notes, floating art, cross spread images or boxes, conversion of footnotes to endnote, placement of footnote as display text, and placement of images or graphics close to, but not preceding, the callout). Additional advanced features may also be available at the option of the publisher. These can include linked index entries, removal of blank pages, cross-referencing, contextual links, listings of figures and tables, and links from text reference of a figure to the figure or a footnote text reference to an endnote. After proofing 259, the completed DRM specific file is posted 261 to a DRM Engine (described below) for subsequent distribution.

As shown, after generation of a title in the selected distribution format(s), the process 240 may store 260 the title's metadata in a database of metadata corresponding to different titles. As described below, this stored metadata can be used to construct a catalog of titles for a retailer.

### III. Catalogs

Retailers often play an important role in publication sales, for example, by handling the tasks of promoting publications. For instance, Amazon.com promotes most of its available publications with a web-page providing a cover image, summary, and reader reviews. Some retailers provide libraries of over one million titles making the maintenance of their offerings a potentially time consuming task.

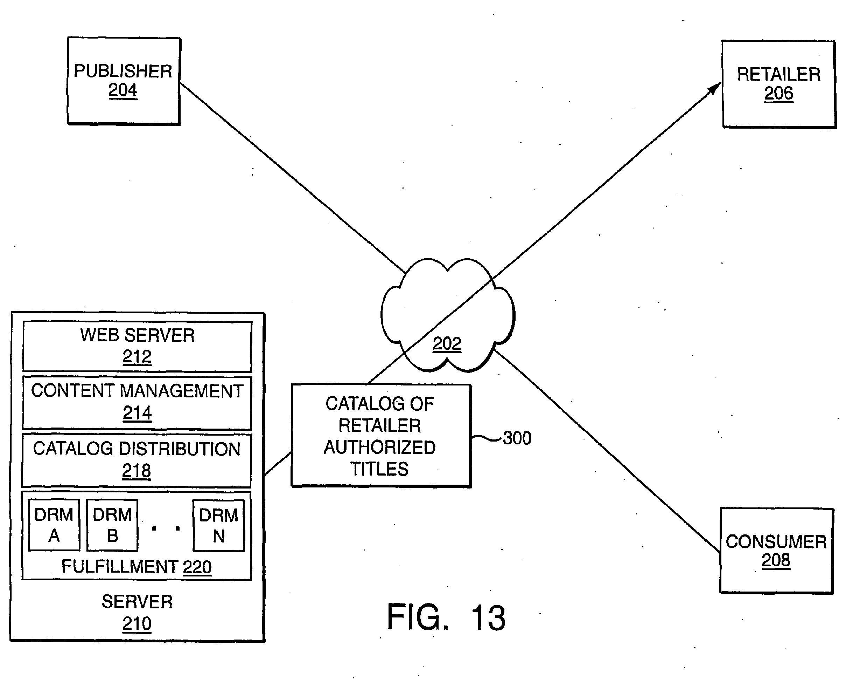

As shown in FIG. 13, a server 210 can include catalog generation and distribution instructions 218 that can generate a "catalog" 300 of titles a retailer is authorized and desires to sell. The catalog 300 can list titles available to a retailer and can include some or all of the metadata submitted with a title. Additionally, the catalog generation instructions 218 can customize the format of the catalog 300 for a particular retailer 206, for example, to work with software the retailer may use to manage title information. For instance, the retailer 206 may feature software that automatically processes a received catalog 300 to create new web-page information for new titles or amend web-page information for pre-existing ones.

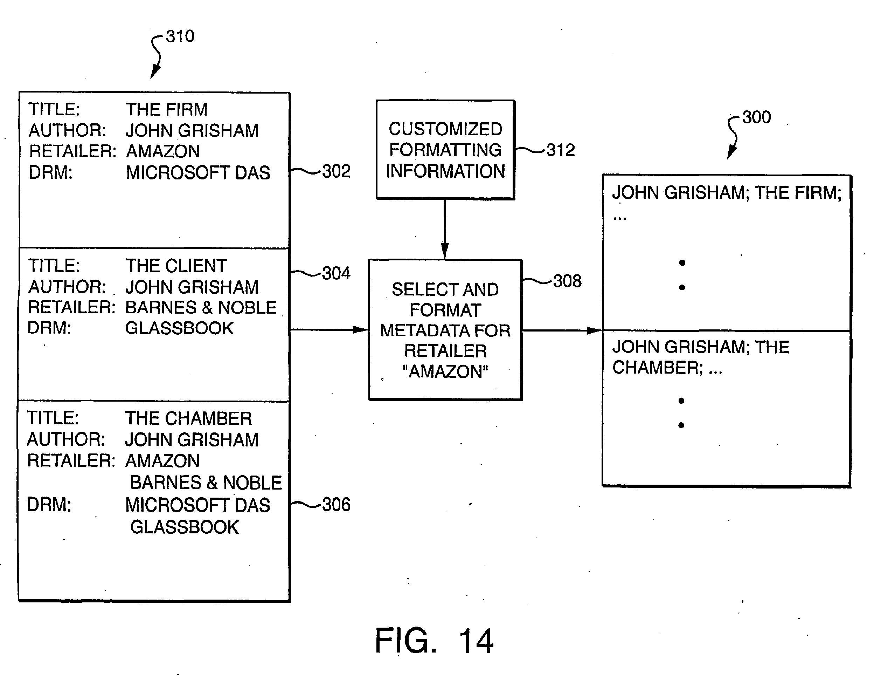

FIG. 14 illustrates an example of catalog 300 generation. As shown, a process 308 selects catalog 300 data from stored metadata records 310. The metadata records 310 correspond to submitted titles and can include information identifying one or more authorized retailers and/or one or more unauthorized dealers. The process 308 can use the information to select metadata records of titles a particular retailer is authorized to handle.

For example, metadata records 302 and 306 designate "Amazon" as an authorized retailer for eBooks of John Grisham's "The Firm" 302 and "The Chamber" 306. Thus, the catalog 300 generated by the process 308 can include records for these titles, for example, as a result of an SQL (Structured Query Language) query for records listing "Amazon" as an authorized retailer.

While the metadata records shown specify individual retailers, a publisher may identify a group of retailers by attributes or a grouping code (e.g., "E-Commerce Vendors"). Additionally, a default set of retailers may apply to metadata records that do not specify a particular set of retailers.

Since different retailers may use different software and/or data formats to process title records, the process 308 can customize the catalog 300 file generated for a particular retailer by using customized formatting information 312. Such formatting information 312 can specify the metadata to include in the catalog 300 and the arrangement and encoding of included metadata. For example, as shown, the catalog 310 features a semi-colon delimited record for each title. That is, a semi-colon separates different fields of the record. Alternatively, catalog 300 records can be encoded in a markup language for easy incorporation into a retailer's web-pages. For example, a record of "<TITLE>The Firm</TITLE><AUTHOR>Grisham</AUTHOR>" includes <TITLE> and <AUTHOR> markup tags that identify the information included in the record.

In addition to text and other data, a retailer may also prefer to receive an image of a book cover for display by their web-pages. Such images may be included as data within a catalog, for example, as JPEG (Joint Picture Experts Group) or GIF (Graphics Interchange Format) image data. Alternatively, each title may have corresponding images stored at a FTP (File Transfer Protocol) site in accordance with a naming convention such as title_xpixelsize_x_ypixelsize.format (e.g., TheFirm_600_ x_400.jpeg).

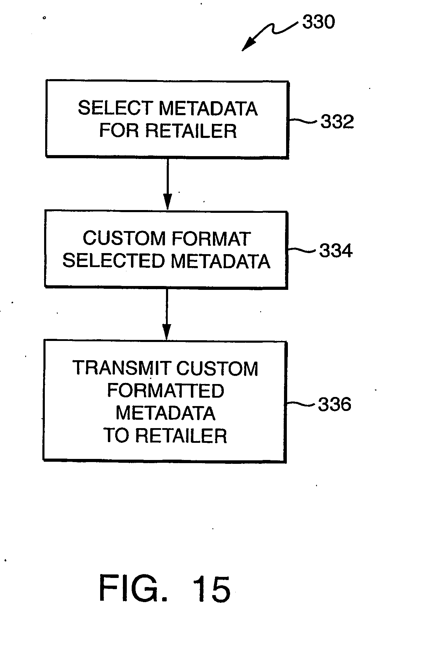

FIG. 15 illustrates an example of a process 330 that the catalog generation instructions 218 may implement. As shown, the process 330 selects 332 metadata records of titles for inclusion in a retailer's catalog. The selection 332 can feature both "authorization filters" that restrict retailers to titles they are authorized to sell and "retailer defined filters" that prevent retailers from catalog inclusion of works they are not interested in selling or promoting.

The authorization filters can test for a variety of conditions that may prevent inclusion of a work in a retailer's catalog. For example, the filters may eliminate a work from a catalog if the retailer is outside the territory in which the work is authorized to be sold. Similarly, the filters may eliminate a title from inclusion in a catalog if the title has not yet been priced for sale or if the work has not yet been proofed by the publisher.

The "retailer defined filters" enable a retailer to specify characteristics of works that the retailer does not want to sell or promote. For instance, "Bob's Sci-Fi eBook Store" may only be interested in publications categorized as science or science fiction. Thus, in this example, the process 330 may check to limit titles included in a Bob's catalog to only include titles in these categories. Similarly, a retailer, for example, may request only those titles approved by some organization.

As described above, information for titles selected for inclusion in the catalog may be formatted 334 according to retailer preference. After completing the selection 332 and formatting 334, the catalog may be transmitted 336 to the retailer. Transmission may occur, for example, via e-mail or a sequence of HTTP messages. Transmission may alternatively occur by storing the catalog in an FTP (File Transfer Protocol) directory accessible by the retailer. This latter option enables the retailer to control when and how often the catalog information is received.

The process 330 shown in FIG. 15 may be programmed to automatically repeat at a designated interval. For example, a retailer may request automatic generation of a catalog on a daily or weekly basis. For retailers receiving more than one catalog at different times, the process 330 may generate "delta" catalog files that only include changes from a preceding catalog. For example, the catalog may only include new titles authorized for sale by a retailer or new/changed information about titles in a previous catalog or catalogs.

### IV. Fulfillment

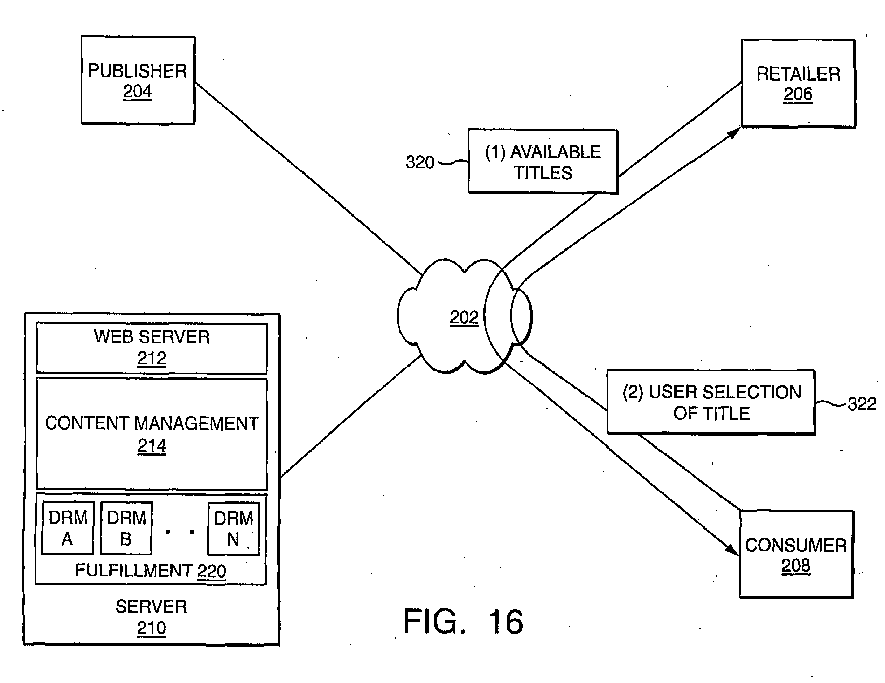

A server 210 may provide a web-site that enables consumers and/or publishers to request electronic books or "print-on-demand" hard copies of a title. However, as described above, retailers often handle the task of presenting titles to consumers for purchase. For example, Amazon.com allows consumers to search lists and descriptions of different available eBooks. In the case of eBooks, fulfilling purchase requests can add the burden of DRM system maintenance and support to a retailers responsibilities. FIGs. 16-18 illustrate a system that can remove the burden of handling these fulfillment duties from a retailer.

As shown in FIG. 16, a consumer 208 can interact with a retailer 206 over a network 202 through mechanisms selected by the retailer 206 such web-pages, email, and so forth. After a consumer 208 requests 322 an eBook title, for example, by selecting a title from a web-page 320, a fulfillment process 220 provided by a remote server 210 handles distribution of the eBook to the consumer. The server 210 may be the same server 210 providing other features described herein.

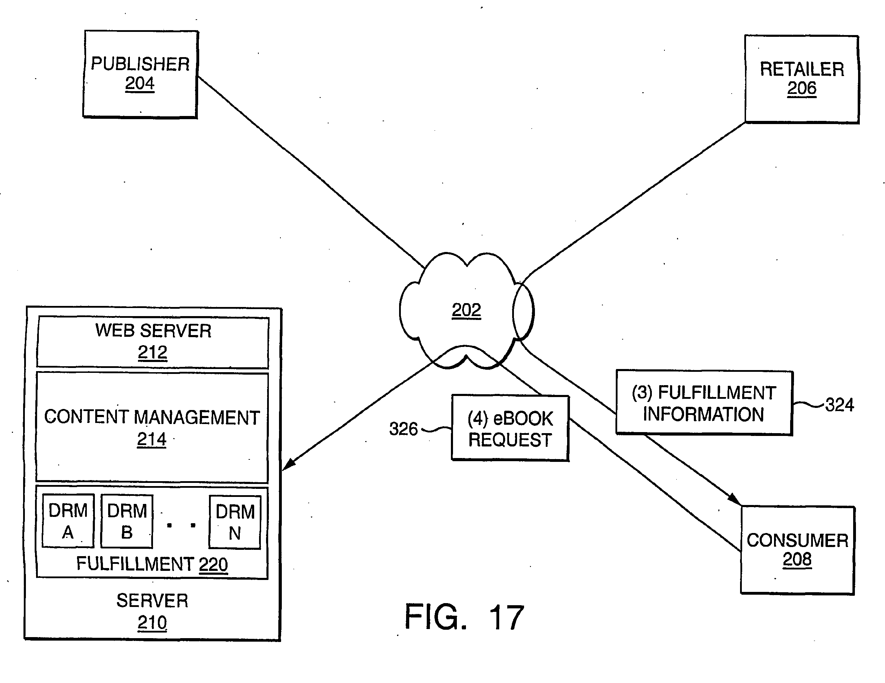

As shown in FIG. 17, the retailer 206 transmits fulfillment information 324, such as a URL (Universal Resource Locator) link, to the consumer 208 for each purchased eBook. For example, the retailer 206 may include the URL in an e-mail message sent to the consumer 208 or may include the URL in a dynamically constructed web-page that lists items requested by a consumer 208.

When activated, the link directs a secure message 326 to the server 210. The message 326 encodes identification of the title ordered and identification of the retailer. For example, a consumer may receive a URL having the following format:
https://server.com?parameters=retailerID&itemID
where "https" identifies a secure connection between the consumer 208 and server 210, "server.com" identifies the location of the server 210 in the network, and retailerID and item ID identify the retailer and ordered item SKU (Store Keeping Unit, the product identifying number used by the server 210), respectively. The URL parameters may be encrypted, for example, using Triple DES. Additionally, the URL may feature additional parameters such as a time stamp and/or the results of a hashing of the other parameters to thwart pirate attempts to construct a valid URL. The URL may also include a tracking number assigned by the retailer to the transaction for retailer tracking purposes. As the server 210 may insulate the retailer 206 from DRM tasks, the URL need not include identification of any particular DRM system.

As shown in FIG. 17, when the consumer selects the URL link, the consumer's 208 client no longer needs to interact with the retailer 206, but is instead interacting with the server 210. However, this may be completely transparent to a consumer 208. That is, the consumer 208 may only perceive interaction with the retailer 206. To enhance this effect, the server 210 may provide user interfaces customized for a particular retailer. For example, a server 210 may provide status and error message web-pages that prominently feature the retailer's logo, stylesheet, or other information for each retailer using the server 210

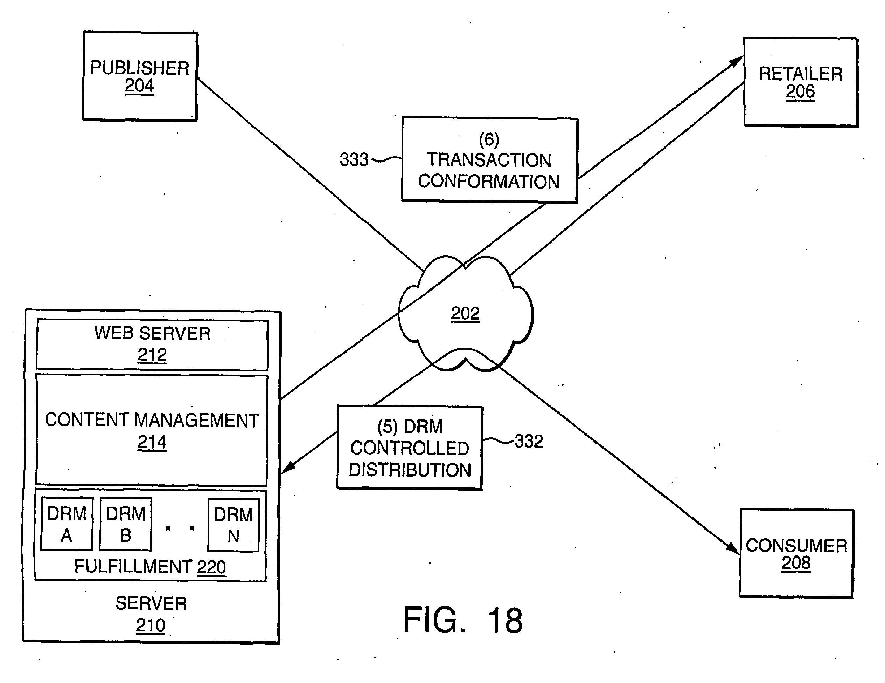

As shown in FIG. 18, after receiving the eBook request, the server 210 handles distribution 332 of the eBook to the consumer in accordance with the digital rights management system associated with the title. After distribution 332, the server 212 can transmit confirmation 333 to the Retailer 206 describing both successful delivery of the content or, in the event of a failure, what the reason for failure.

As shown, the server 210 supports multiple DRM systems. While each DRM system may operate differently, many share a similar sequence. In a typical scenario, DRM distribution of a title begins when a DRM system attempts to connect to the consumer's 208 reader software. If the reader software is not installed, the system can guide the consumer through a download/installation process. The DRM system then requests credentials (e.g. computer ID, reader software ID) and uses these credentials to "lock" a copy of the ordered title for that consumer. Such locking may occur by encrypting a copy of the title or providing an encrypted voucher needed by the reader software to open a generically encrypted copy of the title. A "locked" copy of the title is then sent to the consumer 208. The consumer's 208 device then automatically launches the reader software associated with the DRM scheme used and loads and presents the title. While the process described above may seem complex, the entire process happens in real-time and, typically, does not take more time than loading a standard web page.

The scheme described above can offer a number of potential benefits. Again, by server 210 handling fulfillment, retailers need not be aware that DRMs are even being used. Additionally, while FIGs. 16-18 illustrate distribution of a title for a single retailer 206, the server 210 can support many different retailers and their consumers simultaneously. Thus, addition of a new DRM system at the server 210 can expand the number and variety of product distribution capabilities of many retailers.

The server 210 may implement DRM handling by bundling instructions for different DRM systems into a DRM Processing Engine. The server 210 may include many different DRM Processing Engines operating in parallel. This technique can permit load balancing between the DRM Processing Engines and provide scalability as the number of fulfillment operations increases. Additionally, new DRM Processing Engines can be added or removed at any time without impacting system availability.

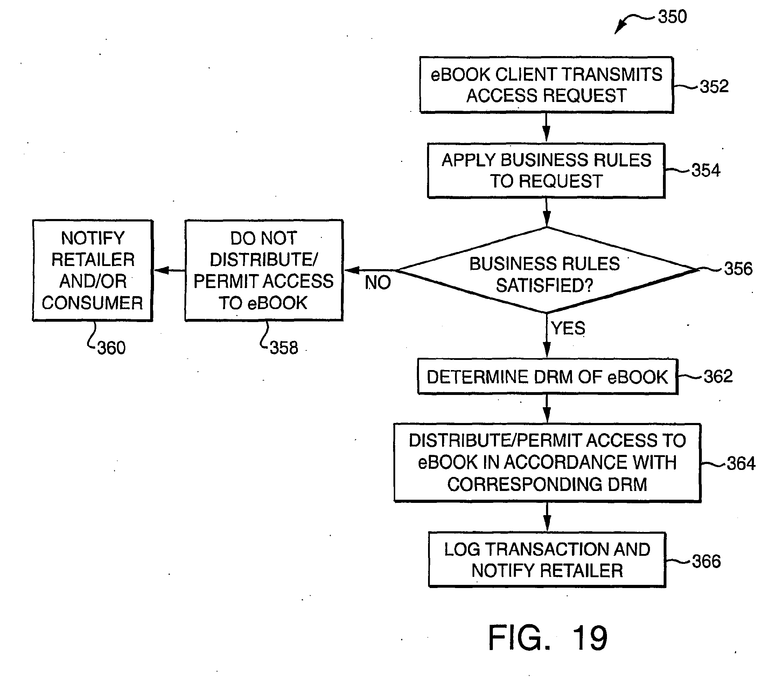

FIG. 19 illustrates a title fulfillment process 350. As shown, the process 350 receives a request for a title 352. The process 350 may then verify security information (e.g., a hash value) received with the request. This may trigger transmission of a confirmation message (e.g., an HTTP message) to the retailer. This provides retailers with virtually real-time confirmation of consumer use of an the order link supplied by the retailer 206. These confirmation messages may be queued for retransmission when a retailer's 206 web-site is down. The confirmation message may include identification of the ordered title and/or a order number, among other information.

As shown in FIG. 19, the process 350 may determine 354 whether to distribute the electronic book to the network client in accordance with one or more business rules applied 354 independent of DRM operation. For example, a business rule may verify that the retailer identified in the request is authorized to sell the title. A different business rule may deny access to a title before a street date specified by the publisher. Yet another business rule may verify that the consumer is not downloading the book to different devices or exceeding a maximum number of downloads. As new requirements emerge, business rules may be created and/or updated. The business rules may be encoded, for example, as boolean expressions or in a programming language such as C and/or SQL (Structured Query Language). If a business rule indicates distribution should not occur 358, the process 350 can transmit 360 corresponding error messages and/or customized screens to the retailer and/or consumer.

After business rule application, the process 350 may determine 362 a DRM system selected for the title. For example, server instructions may use the received retailer ID and the title ID of the request to perform a table lookup of DRM systems associated with the title by the retailer. Thereafter, the title can be distributed 364 in accordance with the determined DRM. As specified by a DRM or business rule, successful downloading of titles may be noted to prevent the consumer from re-downloading the same eBook using the original URL link. Failed downloads may not be recorded to enable a consumer to attempt to re-download in the event of a bad Internet connection.

As shown, the process 350 may log 366 information describing a transaction, for example, by logging information used in billing, determining publisher compensation, business rule audits, determining DRM usage fees, and so forth.

Again, throughout the process 350 illustrated in FIG. 19, retailers and/or consumers may receive status and error messages regarding the progress of their request. Examples of events that can cause notification include the occurrence of unknown errors, completion of a successful download, a determination that a title was not found or available, a determination that the consumer did not order the title from an authorized retailer, a determination that the download attempt exceeded a limit, the occurrence of communication errors, a determination that reader software was not installed or activated, and a determination that the received consumer credentials were incorrect. While the server may offer a predefined set of status and error message web pages, these messages may be customize in real-time to each retailer's specifications. Alternatively, events can trigger a re-direct to a web-page provided by the retailer's web-server.

Again, the process 350 may provide retailers with status information such as confirmation of an order. For example, a server may transmit a confirmation message to a retailer that encrypts the order tracking number, time stamp, and other information.

### V. Implementations

The techniques described herein are not limited to any particular hardware or software configuration; they may find applicability in any computing or processing environment. The techniques may be implemented in hardware or software, or a combination of the two. Preferably, the techniques are implemented in computer programs executing on programmable computers that each include a processor, a storage medium readable by the processor (including volatile and non-volatile memory and/or storage elements), at least one input device, and one or more output devices.

Each program is preferably implemented in high level procedural or object oriented programming language to communicate with a computer system. However, the programs can be implemented in assembly or machine language, if desired. In any case the language may be compiled or interpreted language.

Each such computer program is preferably stored on a storage medium or device (e.g., CD-ROM, hard disk, or magnetic disk) that is readable by a general or special purpose programmable computer for configuring and operating the computer when the storage medium or device is read by the computer to perform the procedures described herein. The system may also be considered to be implemented as a computer-readable storage medium, configured with a computer program, where the storage medium so configured causes a computer to operate in a specific and predefined manner.

Other embodiments are within the scope of the following claims.

## Claims

1. A method of processing content for distribution over a computer network (202), the method comprising:
receiving electronic content (222) submitted by a submitter (208), the electronic content being identified through a user interface, the user interface being presented at a network client remote from a server (210);
receiving identification of at least one electronic book digital right management system selected from a set of more than one digital rights management system presented through a user interface, the selected digital rights management system(s) being identified through the user interface, the user interface being presented at a network client remote from the server, the set of more than one digital rights management systems comprising two or more digital rights management systems from unaffiliated companies;
accessing, at the server, the identification of the digital rights management system selected from the at least one of a set of more than one electronic book digital rights management system; and
automatically generating, at the server, an electronic book (230) from the received electronic content (222) for distribution (228) in accordance with the identified electronic book digital rights management system(s).

2. The method of claim 1, wherein receiving the electronic content comprises receiving the electronic content over a network from a network client operated by the submitter.

3. The method of claim 2, wherein the user interface instructions comprise mark-up language instructions and transmitting the user interface instructions to the network client comprise transmitting the user interface instructions in response to an **HTTP** (HyperText Transfer Protocol) message.

4. The method of any preceding claim, wherein the set of more than one electronic book digital rights management systems comprise digital rights management systems offered by non-affiliated vendors.

5. The method of any preceding claim, wherein automatically generating an electronic book comprises lossy compression of graphic images included in the electronic content.

6. The method of any preceding claim, further comprising receiving metadata corresponding to the electronic content and preferably wherein the metadata comprises at least one of the following: an author, a subject, a publisher, and a summary.

7. The method of claim 6 wherein the metadata comprising hard copy printing information.

8. The method of claim 7, wherein the hard copy printing information comprises art least one of the following: a number of pages, a cover size, and a type of binding.

9. The method of claim 7 or 8, further comprising hard copy printing of the electronic content and preferably wherein the hard copy printing comprises:
printing a color cover;
printing a book block; and
binding the printed cover and book block.

10. The method of any of claims 7 to 9, wherein the metadata comprises distribution information.

11. The method of claim 10, wherein the distribution information includes the identification of the at least one electronic book digital rights management system and/or comprises a street date and/or identification of at least one authorized retailer,

12. The method of claim 11, further comprising storing the metadata with metadata associated with other received electronic content, preferably further comprising selecting metadata from the stored metadata, the selected metadata corresponding to electronic content authorized for a retailer, more preferably further comprising storing at least a portion of the selected metadata for transmission to the retailer over the network, and more preferably still further comprising formatting information from a retailer and wherein storing at least a portion of the selected metadata comprises storing in accordance with the received formatting information.

13. A computer program product, disposed on a computer readable
medium, for processing content for distribution over a computer network, the program including instructions for causing a processor to:
receive electronic content submitted by a submitter, the electronic content being identified through a user interface at a network client remote from a server;
receive identification of at least one electronic book digital right management system selected from a set of more than one digital rights management system presented through a user interface, the selected digital rights management system(s) being identified through the user interface, the user interface being presented at a network client remote from the server, the set of more than one digital rights management systems comprising two or more digital rights management systems from unaffiliated companies;
access, at a server, the identification of the digital rights management system selected from the at least one of a set of more than one electronic book digital rights management systems; and
automatically generate, at the server, an electronic book from the received electronic content for distribution in accordance with the identified electronic book digital rights management system(s).

14. The computer program product of claim 13, wherein the instructions that cause the processor to receive the electronic content comprise instructions that cause the processor to carry out the method steps of any of claims 2 to 12.

15. A server (210), comprising:
(1) at least one network connection (202);
(2) at least one processor; and
(3) at least one computer readable medium storing instructions for processing by the
processor, the computer readable medium storing;
(a) instructions corresponding to a set of more than one electronic book digital rights management systems; and
(b) instructions for:
(i) receiving electronic content (222) from a submitter (208) over the at least one network connection, the electronic content being identified through a user interface, the user interface being presented at a network client remote from the server;
(ii) receiving metadata corresponding to the electronic content over the at least one network connection, the metadata including identification of at least one of the set of more than one electronic book digital rights management systems, the selected digital rights management system(s) being identified through a user interface, the user interface being presented at a network client remote from the server, the set of more than one digital rights management systems comprising two or more digital rights management systems from unaffiliated companies; and
(iii) automatically generating an electronic book from the received electronic content corresponding to the identified electronic book digital rights management system.

16. The server of claim 15, wherein the metadata comprises identification of at least one authorized retailer; and further comprising instructions for;
(iv) storing the metadata with meta data associated with other received electronic content;
(v) selecting metadata corresponding to electronic content authorized for a retailer; and
(vi) storing at least a portion of the selected metadata for transmission to the retailer over the network and/or wherein the instructions for (i) receiving electronic content from a submitter comprise web-server instructions for handling **HTTP** (HyperText Transfer Protocol) messages.

17. The method of any of the claims 1-12, wherein identification of the electronic content and selection of the at least one digital rights management systems occurs through the same user interface.

18. The method of any of the claim 17, wherein identification of the electronic content and selection of the at least one digital rights management systems occurs through the same screen of the user interface.

19. The method of any of the preceding claims 1-12, wherein the server comprises a logical collection of devices.

## Patentansprüche

1. Verfahren zur Verarbeitung von Inhalt zur Verteilung über ein Computernetzwerk (202), wobei das Verfahren aufweist:
Empfangen von elektronischem Inhalt (222), der von einem Übermittler (208) übermittelt wird, wobei der elektronische Inhalt durch eine Benutzerschnittstelle identifiziert wird, wobei die Benutzerschnittstelle an einem Netzwerkclient entfernt von einem Server (210) präsentiert wird;
Empfangen der Identifikation wenigstens eines Verwaltungssystems für digitale Rechte für elektronische Bücher, das aus einer Gruppe aus mehr als einem Verwaltungssystem für digitale Rechte ausgewählt wird, das durch eine Benutzerschnittstelle präsentiert wird, wobei das/die ausgewählte/n Verwaltungssystem/e für digitale Rechte durch die Benutzerschnittstelle identifiziert wird, wobei die Benutzerschnittstelle an einem Netzwerkclient entfernt von dem Server präsentiert wird, wobei die Gruppe aus mehr als einem Verwaltungssystem für digitale Rechte zwei oder mehr Verwaltungssysteme für digitale Rechte von selbständigen Firmen aufweist;
Zugreifen auf die Identifikation des Verwaltungssystems für digitale Rechte, das aus dem wenigstens einen aus einer Gruppe von mehr als einem Verwaltungssystem für digitale Rechte für elektronische Bücher ausgewählt wird, an dem Server; und
automatisches Erzeugen eines elektronischen Buchs (230) aus dem empfangenen elektronischen Inhalt (222) für die Verteilung (228) gemäß dem/den identifizierten Verwaltungssystem/en für digitale Rechte für elektronische Bücher an dem Server.

2. Verfahren nach Anspruch 1, wobei das Empfangen des elektronischen Inhalts das Empfangen des elektronischen Inhalts über einen Netzwerkclient, der von dem Übermittler betrieben wird, aufweist.

3. Verfahren nach Anspruch 2, wobei die Benutzerschnittstellenanweisungen Auszeichnungssprachen-Anweisungen aufweisen und das Senden der Benutzerschnittstellenanweisungen an den Netzwerkclient das Senden der Benutzerschnittstellenanweisungen ansprechend auf eine HTTP- (HyperText Transfer Protocol-) Nachricht aufweist.

4. Verfahren nach einem der vorhergehenden Ansprüche, wobei die Gruppe aus mehr als einem Verwaltungssystem für digitale Rechte für elektronische Bücher Verwaltungssysteme für digitale Rechte aufweist, die von nichtverbundenen Anbietern angeboten werden.

5. Verfahren nach einem der vorhergehenden Ansprüche, wobei das automatische Erzeugen eines elektronischen Buchs die verlustbehaftete Komprimierung von in dem elektronischen Inhalt enthaltenen grafischen Bildern aufweist.

6. Verfahren nach einem der vorhergehenden Ansprüche, das ferner das Empfangen von Metadaten aufweist, die dem elektronischen Inhalt entsprechen, und wobei die Metadaten vorzugsweise wenigstens eines der Folgenden aufweisen: einen Autor, ein Thema, einen Verleger und eine Zusammenfassung.

7. Verfahren nach Anspruch 6, wobei die Metadaten Hartkopie-Druckinformationen aufweisen.

8. Verfahren nach Anspruch 7, wobei die Hartkopie-Druckinformationen wenigstens eines der Folgenden aufweisen: eine Anzahl von Seiten, eine Einbandgröße und eine Art der Bindung.

9. Verfahren nach Anspruch 7 oder 8, das ferner das Drucken der Hartkopie des elektronischen Inhalts aufweist und wobei das Drucken der Hartkopie vorzugsweise aufweist:
Drucken eines Farbeinbands;
Drucken eines Buchblocks; und
Binden des gedruckten Einbands und des Buchblocks.

10. Verfahren nach jedem der Ansprüche 7 bis 9, wobei die Metadaten Verteilungsinformationen aufweisen.

11. Verfahren nach Anspruch 10, wobei die Verteilungsinformationen die Identifikation des wenigstens einen Verwaltungssystems für digitale Rechte für elektronische Bücher aufweist und/oder einen Erscheinungstermin und/oder die Identifikation wenigstens eines autorisierten Händlers aufweist.

12. Verfahren nach Anspruch 11, das ferner das Speichern der Metadaten mit Metadaten, die zu anderem empfangenem elektronischen Inhalt gehören, aufweist, das ferner das Auswählen von Metadaten aus den gespeicherten Metadaten aufweist, wobei die ausgewählten Metadaten elektronischem Inhalt entsprechen, der für einen Händler zugelassen ist, das ferner vorzugsweise das Speichern wenigstens eines Teils der ausgewählten Metadaten für die Übertragung an den Händler über das Netzwerk aufweist und noch besser ferner das Formatieren von Informationen von einem Händler aufweist, und wobei das Speichern wenigstens eines Teils der ausgewählten Metadaten das Speichern gemäß den empfangenen Formatierungsinformationen aufweist.

13. Computerprogrammprodukt, das auf einem computerlesbaren Medium eingerichtet ist, um Inhalt für die Verteilung über ein Computernetzwerk zu verarbeiten, wobei das Programm Anweisungen umfasst, um zu bewirken, dass ein Prozessor:
elektronischen Inhalt, der von einem Übermittler übermittelt wird, empfängt, wobei der elektronische Inhalt durch eine Benutzerschnittstelle an einem Netzwerkclient entfernt von einem Server identifiziert wird;
die Identifikation wenigstens eines Verwaltungssystems für digitale Rechte für elektronische Bücher, das aus einer Gruppe aus mehr als einem Verwaltungssystem für digitale Rechte ausgewählt wird, das durch eine Benutzerschnittstelle präsentiert wird, empfängt, wobei das/die ausgewählte/n Verwaltungssystem/e für digitale Rechte durch die Benutzerschnittstelle identifiziert wird, wobei die Benutzerschnittstelle an einem Netzwerkclient entfernt von dem Server präsentiert wird, wobei die Gruppe aus mehr als einem Verwaltungssystem für digitale Rechte zwei oder mehr Verwaltungssysteme für digitale Rechte von selbständigen Firmen aufweist;
auf die Identifikation des Verwaltungssystems für digitale Rechte, das aus dem wenigstens einen aus einer Gruppe von mehr als einem Verwaltungssystem für digitale Rechte für elektronische Bücher ausgewählt wird, an dem Server zugreift; und
ein elektronisches Buch aus dem empfangenen elektronischen Inhalt für die Verteilung gemäß dem/den identifizierten Verwaltungssystem/en für digitale Rechte für elektronische Bücher an dem Server automatisch erzeugt.

14. Computerprogrammprodukt nach Anspruch 13, wobei die Anweisungen, die bewirken, dass der Prozessor den elektronischen Inhalt empfängt, Anweisungen aufweisen, um zu bewirken, dass der Prozessor die Verfahrensschritte nach einem der Ansprüche 2 bis 12 ausführt.

15. Server (210), der aufweist:
(1) wenigstens eine Netzwerkverbindung (202);
(2) wenigstens einen Prozessor; und
(3) wenigstens ein computerlesbares Medium, das Anweisungen zur Verarbeitung durch den Prozessor aufweist, wobei das computerlesbare Medium speichert:
(a) Anweisungen, die einer Gruppe aus mehr als einem Verwaltungssystem für digitale Rechte für elektronische Bücher entsprechen; und
(b) Anweisungen zum
(i) Empfangen von elektronischem Inhalt (222) von einem Übermittler (208) über die wenigstens eine Netzwerkverbindung, wobei der elektronische Inhalt durch eine Benutzerschnittstelle identifiziert wird, wobei die Benutzerschnittstelle an einem Netzwerkclient entfernt von dem Server präsentiert wird;
(ii) Empfangen von Metadaten, die dem elektronischen Inhalt entsprechen, über die wenigstens eine Netzwerkverbindung, wobei die Metadaten die Identifikation des wenigstens einen aus der Gruppe aus mehr als einem Verwaltungssystem für digitale Rechte für elektronische Bücher umfassen, wobei das/die ausgewählte/n Verwaltungssystem/e für digitale Rechte durch eine Benutzerschnittstelle identifiziert wird, wobei die Benutzerschnittstelle an einem Netzwerkclient entfernt von dem Server präsentiert wird, wobei die Gruppe aus mehr als einem Verwaltungssystem für digitale Rechte zwei oder mehr Verwaltungssysteme für digitale Rechte von selbständigen Firmen aufweist; und
(iii) automatischen Erzeugen eines elektronischen Buchs aus dem empfangenen elektronischen Inhalt, der dem identifizierten Verwaltungssystem für digitale Rechte für elektronische Bücher entspricht, an dem Server.

16. Server nach Anspruch 15, wobei die Metadaten die Identifikation wenigstens eines autorisierten Händlers aufweisen und ferner Anweisungen aufweisen zum:
(iv) Speichern der Metadaten mit Metadaten, die zu anderem empfangenen elektronischen Inhalt gehören;
(v) Auswählen von Metadaten, die elektronischem Inhalt entsprechen, der für einen Händler zugelassen ist ; und
(vi) Speichern wenigstens eines Teils der ausgewählten Metadaten für die Übertragung an den Händler über das Netzwerk und/oder wobei die Anweisungen für das (i) Empfangen von elektronischem Inhalt von einem Übermittler Webserver-Anweisungen für die Abwicklung von HTTP- (HyperText Transfer Protocol-) Nachrichten aufweisen.

17. Verfahren nach einem der Ansprüche 1 - 12, wobei die Identifikation des elektronischen Inhalts und die Auswahl des wenigstens einen Verwaltungssystems für digitale Rechte durch die gleiche Benutzerschnittstelle erfolgen.

18. Verfahren nach Anspruch 17, wobei die Identifikation des elektronischen Inhalts und die Auswahl des wenigstens einen Verwaltungssystems für digitale Rechte durch den gleichen Bildschirm der Benutzerschnittstelle erfolgen.

19. Verfahren nach einem der vorhergehenden Ansprüche 1 - 12, wobei der Server eine logische Sammlung von Vorrichtungen aufweist.

## Revendications

1. Procédé de traitement d'un contenu pour permettre sa distribution sur un réseau informatique (202), ce procédé comprenant les étapes consistant à :
recevoir un contenu électronique (222) émis par un demandeur (208), ce contenu électronique étant identifié au travers d'une interface utilisateur, cette interface utilisateur étant présentée à un client du réseau éloigné d'un serveur (210),
recevoir l'identification d'au moins un système de gestion de droits numériques d'un livre électronique choisi parmi un jeu comportant plus d'un système de gestion des droits numériques présenté au travers d'une interface utilisateur, le ou les système(s) de gestion des droits numériques sélectionné(s) étant identifié(s) au travers de l'interface utilisateur, l'interface utilisateur étant présentée à un client du réseau éloigné du serveur, le jeu comportant plus d'un système de gestion des droits numériques comprenant deux ou un plus grand nombre de systèmes de gestion des droits numériques de Sociétés non affiliées,
accéder sur le serveur à l'identification du système de gestion des droits numériques sélectionné parmi le jeu comportant plus d'un système de gestion des droits numériques d'un livre électronique, et
générer automatiquement sur le serveur un livre électronique (230) à partir du contenu électronique (222) reçu pour permettre sa distribution (228) conformément au(x) système(s) de gestion des droits numériques du livre électronique identifié(s).

2. Procédé conforme à la revendication 1, selon lequel l'étape de réception du contenu électronique comprend la réception du contenu électronique sur un réseau à partir d'un client de réseau actionné par le demandeur.

3. Procédé conforme à la revendication 2, selon lequel les instructions d'interface utilisateur comprennent des instructions en langage de balisage et la transmission des instructions d'interface utilisateur au client du réseau comprend la transmission des instructions d'interface utilisateur en réponse à un message http (HyperText Transfer Protocol).

4. Procédé conforme à l'une quelconque des revendications précédentes, selon lequel le jeu comportant plus d'un système de gestion des droits numériques d'un livre électronique comprend des systèmes de gestion des droits numériques offerts par des vendeurs non affiliés.

5. Procédé conforme à l'une quelconque des revendications précédentes, selon lequel la génération automatique d'un livre électronique comprend la compression avec perte d'images graphiques renfermées dans le livre électronique.

6. Procédé conforme à l'une quelconque des revendications précédentes, comprennent en outre une étape consistant à recevoir des métadonnées correspondant au contenu électronique et de préférence les métadonnées comprennent au moins l'une des données suivantes : un auteur, un sujet, un éditeur et un résumé.

7. Procédé conforme à la revendication 6, selon lequel les métadonnées comprennent une information d'impression d'une copie papier.

8. Procédé conforme à la revendication 7, selon lequel l'information d'impression d'une copie papier comprend au moins l'une des informations suivantes : un nombre de pages, une dimension de couverture et un type de liaison.

9. Procédé conforme à la revendication 7 ou 8, comprenant en outre l'impression d'une copie papier du contenu électronique et, de préférence, l'impression d'une copie papier comprenant :
l'impression d'une couverture couleur,
l'impression d'un bloc de livre, et
la liaison de la couverture imprimée et du bloc de livre.

10. Procédé conforme à l'une quelconque des revendications 7 à 9, selon lequel les métadonnées comprennent une information de distribution.

11. Procédé conforme à la revendication 10, selon lequel l'information de distribution comporte l'identification du système de gestion des droits numériques du livre électronique et/ou comprend une date de routage et/ou l'identification d'au moins un vendeur au détail autorisé.

12. Procédé conforme à la revendication 11, comprenant en outre une étape d'enregistrement des métadonnées avec des métadonnées associées à d'autres contenus électroniques reçus, de préférence comprenant en outre la sélection de métadonnées issues des métadonnées enregistrées, les métadonnées sélectionnées correspondant au contenu électronique autorisé pour un vendeur au détail, comprenant en outre plus préférentiellement l'enregistrement d'au moins une partie des métadonnées sélectionnées pour permettre leur transmission au vendeur au détail sur le réseau, et plus préférentiellement encore comprenant en outre une information de formatage provenant d'un vendeur au détail, et selon lequel l'enregistrement d'au moins une partie des métadonnées sélectionnées comprend l'enregistrement conformément à l'information de formatage reçue.

13. Produit programme d'ordinateur enregistré sur un milieu pouvant être lu par un ordinateur pour permettre de traiter un contenu de façon à permettre sa distribution sur un réseau informatique, ce programme renfermant des instructions pour permettre à un processeur :
de recevoir un contenu électronique émis par un demandeur, ce contenu électronique étant identifié au travers d'une interface utilisateur sur un réseau client éloigné d'un serveur,
de recevoir l'identification d'au moins un système de gestion des droits numériques d'un livre électronique choisi parmi un jeu comportant plus d'un système de gestion des droits numériques présenté au travers d'une interface utilisateur, le ou les système(s) de gestion des droits numériques sélectionné(s) étant identifié(s) au travers de l'interface utilisateur, l'interface utilisateur étant présentée à un client du réseau éloigné du serveur, le jeu comprenant plus d'un système de gestion des droits numériques comprenant deux ou un plus grand nombre de systèmes de gestion des droits numériques de Sociétés non affiliées,
avoir accès sur un serveur, à l'identification du système de gestion des droits numériques sélectionné parmi le jeu comprenant plus d'un système de gestion des droits numériques d'un livre électronique, et
générer automatiquement sur le serveur un livre électronique à partir du contenu électronique reçu pour permettre sa distribution conformément au(x) système(s) de gestion des droits numériques du livre électronique identifié(s).

14. Produit programme d'ordinateur conforme à la revendication 13, dans lequel les instructions qui permettent au processeur de recevoir le contenu électronique comprennent des instructions qui permettent au processeur de mettre en oeuvre les étapes du procédé conforme à l'une quelconque des revendications 2 à 12.

15. Serveur (210) comprenant :
(1) au moins une connexion (202) à un réseau,
(2) au moins un processeur, et
(3) au moins un milieu pouvant être lu par un ordinateur enregistrant des instructions pour permettre leur traitement par le processeur,
le milieu pouvant être lu par un ordinateur enregistrant :
(a) des instructions correspondant à un jeu comprenant plus d'un système de gestion des droits numériques d'un livre électronique, et
(b) des instructions pour :
(i) recevoir un contenu électronique (222) d'un demandeur (208) sur la connexion au réseau, le contenu électronique étant identifié au travers d'une interface utilisateur, l'interface utilisateur étant présentée à un client du réseau éloigné du serveur,
(ii) recevoir des métadonnées correspondant au contenu électronique sur la connexion au réseau, ces métadonnées comprenant l'identification d'au moins un système de gestion des droits numériques d'un livre électronique, le ou les système(s) de gestion des droits numériques choisi(s) étant identifiés au travers d'une interface utilisateur, cette interface utilisateur étant présentée à un client du réseau éloigné du serveur, le jeu comprenant plus d'un système de gestion des droits numériques comprenant deux ou un plus grand nombre de systèmes de gestion des droits numériques provenant de Sociétés non affiliées, et
(iii) générer automatiquement un livre électronique à partir du contenu électronique reçu conformément au système de gestion des droits numériques du livre électronique identifié.

16. Serveur conforme à la revendication 15, dans lequel les métadonnées comprennent l'identification d'au moins un vendeur au détail autorisé et comprennent en outre des instructions pour :
(iv) enregistrer les métadonnées avec des métadonnées associées à d'autres contenus électroniques reçus,
(v) sélectionner des métadonnées correspondant à un contenu électronique autorisé pour un vendeur au détail, et
(vi) enregistrer au moins une partie des métadonnées sélectionnées pour permettre leur transmission au vendeur au détail sur le réseau et/ou les instructions pour (i) recevoir le contenu électronique provenant d'un demandeur comprennent des instructions de serveur Web pour permettre de traiter des messages http (HyperText Transfer Protocol).

17. Procédé conforme à l'une quelconque des revendications 1 à 12, selon lequel l'identification du contenu électronique et la sélection du ou des système(s) de gestion des droits numériques sont effectuées au travers de la même interface utilisateur.

18. Procédé conforme à la revendication 17, selon lequel l'identification du contenu électronique et la sélection du ou des système(s) de gestion des droits numériques sont effectuées au travers du même écran de l'interface utilisateur.

19. Procédé conforme à l'une quelconque des revendications 1 à 12, selon lequel le serveur comprend une collection logique de dispositifs.
